# EUROPEAN PATENT SPECIFICATION

(11) **EP 2 550 820 B1**
(45) Date of publication and mention of the grant of the patent: **23.05.2018**
(21) Application number: 11759629.6
(22) Date of filing: 18.03.2011
(51) Int. Cl.: H04W 48/10

(54) **STAMPING MECHANISM FOR BEACON MESSAGE TRANSMISSION**
STEMPELMECHANISMUS FÜR EINE BAKENMITTEILUNGSÜBERTRAGUNG
MÉCANISME D'ESTAMPILLAGE TEMPOREL POUR LA TRANSMISSION DE MESSAGE DE BALISE

(30) Priority: 24.03.2010 EP 10157561
(43) Date of publication of application: 30.01.2013
(73) Proprietor: NEC Corporation, Tokyo 108-8001 (JP)
(72) Inventor: ZAPPULLA Fabrice, Reading Berkshire RG2 OTD (GB)
(74) Representative: Vossius & Partner Patentanwälte Rechtsanwälte mbB
(86) International application number: PCT/JP2011/057500
(87) International publication number: WO 2011/118825

(56) References cited:
- WO-A1-2008/119380
- WO-A2-2007/016031
- JP-A- 2009 100 452
- US-A1- 2003 179 110
- US-A1- 2007 002 811
- US-A1- 2009 239 530
- JORDI PEREZ-ROMERO ET AL: "A Novel On-Demand Cognitive Pilot Channel Enabling Dynamic Spectrum Allocation", NEW FRONTIERS IN DYNAMIC SPECTRUM ACCESS NETWORKS, 2007. DYSPAN 2007. 2ND IEEE INTERNATIONAL SYMPOSIUM ON, IEEE, PI, 1 April 2007 (2007-04-01), pages 46-54, XP031095601, ISBN: 978-1-4244-0663-0
- HOUZE P ET AL: "Common Pilot Channel for Network Selection", IEEE VEHICULAR TECHNOLOGY CONFERENCE, XX, XX, 8 May 2006 (2006-05-08), pages 67-71, XP002411303,
- CORDIER P ET AL: "E2R Cognitive Pilot Channel Concept", INTERNET CITATION, 1 June 2006 (2006-06-01), XP002458110, Retrieved from the Internet: URL:http://e2r2.motlabs.com/dissemination/ conferences/E2RII_45_IST06_Paper.p [retrieved on 2007-11-09]
- DIDIER BOURSE ET AL.: 'The E2R II Flexible Spectrum Management (FSM) Framework and Cognitive Pilot Channel(CPC) Concept - Technical and Business Analysis and Recommendations' E2R II WHITE PAPER, [Online] November 2007, pages 1 - 52, XP008145264 Retrieved from the Internet: <URL:https://ict-e3.eu/project/white-papers /e2 r/7.E2RII_FSM_CPC_UBM_White_Paper_Final%5b1 %5 d.pdf>
- QIXUN ZHANG ET AL.: 'A Novel Mesh Division Scheme using Cognitive Pilot Channel in Cognitive Radio Environment' VEHICULAR TECHNOLOGY CONFERENCE FALL (VTC 2009-FALL), [Online] vol. 70, 20 September 2009, pages 1 - 6, XP031600406 Retrieved from the Internet: <URL:http://ieeexplore.ieee.org/stamp/stamp .js p?tp=&arnumber=5379044>
- PIETER BALLON ET AL.: 'Flexible Spectrum Business Models for the Mobile Industry' MOBILE BUSINESS, 2008. ICMB '08. 7TH INTERNATIONAL CONFERENCE, [Online] 07 July 2008, pages 86 - 94, XP031289079 Retrieved from the Internet: <URL:http://ieeexplore.ieee.org/stamp/stamp .js p?tp=&arnumber=4570167>

## Description

### TECHNICAL FIELD

The invention pertains to telecommunication field and concerns a method for transmitting beacon services to a User Equipment (UE) roaming in an area covered by several Radio Access Technologies (RAT's), the area comprising a plurality of geographical zones, each geographical zone comprising at least one network base station using several frequencies and at least one Radio Access Technology (RAT) among the plurality of RAT's, the User Equipment (UE) having various RAT capabilities and preferences and supporting several frequencies.

The invention also concerns a beacon base station for transmitting the Beacon services and a User Equipment (UE) adapted to receive the beacon services transmitted by the Beacon base station.

### BACKGROUND ART

A user roaming in an area covered by several telecommunication networks may choose an operator, a RAT (Radio Access Technology), and/or a frequency of communication based on roaming agreements between operators in this area and on the capabilities and preferences of its User Equipment (UE).

Cognitive Pilot Channel (CPC) is a kind of Beacon channel that may be used in cognitive radio to provide information to cognitive mobiles about the available operators, Radio Access Technologies (RAT's) and Frequencies available in the geographical area.

The CPC is used to support a terminal during the "start-up" phase and "on-going" phase:
- During the start-up phase, beginning, at "switch on" of the mobile terminal, the mobile terminal is searching for a candidate network to camp on; and
- In the "on-going" phase, the mobile terminal is camping on a network with a dedicated RAT and is able to listen to CPC message broadcasted through the network in order to rapidly detect changes in the environment due to either variation of the mobile position or network reconfigurations.

From this two mobile state, different CPC deployment approaches are possible:
- In the out-band CPC solution, where the CPC is conceived as a radio channel outside the component Radio Access Technologies, the CPC either uses a new radio interface, or alternatively uses an adaptation of legacy technology with appropriate characteristics; and
- In the in-band CPC solution, the CPC is conceived as a logical channel within the technologies of the heterogeneous radio environment.

For both deployments, a CPC manager broadcasts CPC information continuously and periodically for all mobiles presents in the CPC area.

Two major concepts for Cognitive Pilot Channel are proposed by the E3 project and ETSI RRS Group in order to organize RAT's information according to a geographical area: Mesh based approach and Coverage area approach.
- In Mesh based concept, a geographical area covered by a beacon channel, is divided into a plurality of zones, called meshes and information is provided about operators, RAT and frequencies available in each mesh.
- In Coverage area concept, information about all the RAT's and frequencies available with respective RAT's coverage area in the area covered by a beacon channel is broadcasted in the geographical area.

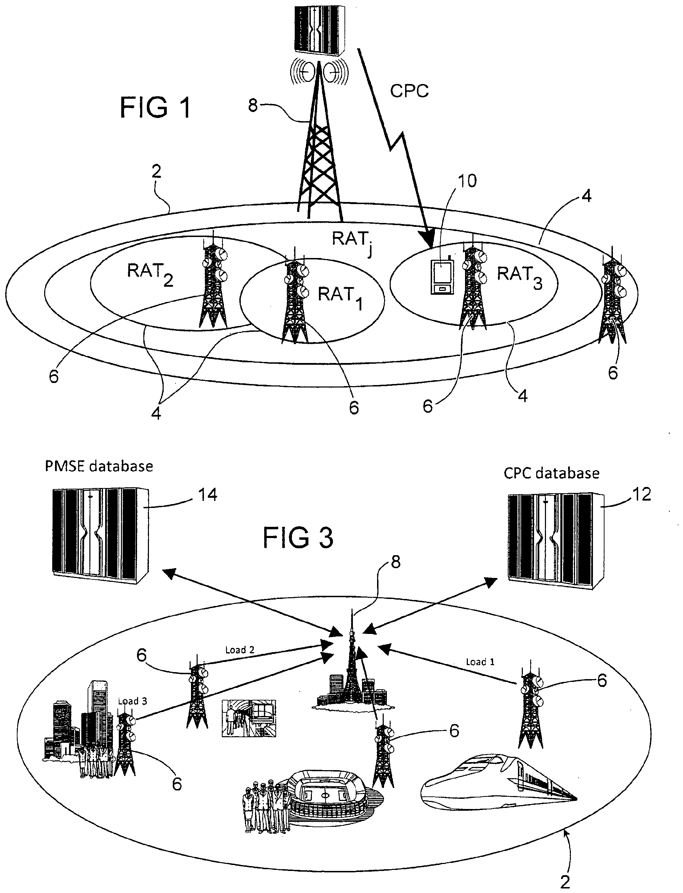

FIG. 1 illustrates a geographical area 2 divided in different zones 4, each zone being covered by a network base station 6 using a Radio Access Technology (RAT) and receiving Beacon services from a Beacon base station 8.

In Mesh based concept, CPC information represents a large quantity of data to be sent especially if the mesh size is small. This forces mobile phones roaming in area 2 to listen to CPC channel longer than coverage area approach. It is to be noted that CPC information are updated according to the network load (new frequencies available or not) and network structure update (new technology, new frequencies, new operator). The frequency update is low between several posts of CPC message, therefore a mobile phone will receive several time the same information.

One of the proposed methods to reduce the CPC data rate is to transmit one CPC message for the whole CPC area, not to meshes of the CPC area, and transmit the coverage area for each technology and frequency. The problem with this kind of approach is that coverage areas are not easily characterized and transmitting a detailed coverage area may result in a large data-rate as well.

US 2009/0239530 A1 relates to a method for establishment of a connection in a radio communication system, a user terminal selects an operator, based on information on at least one operator of a radio communication system in a country-specific pilot channel, selects a radio communication system based on information on at least one radio communication system in an operator-specific pilot channel for the selected operator and carries out an access to the selected radio communication system for establishment of a connection.

### DISCLOSURE OF INVENTION

The invention aims at optimizing the UE's radio use to improve the UE's power saving.

The object of the invention is achieved by means of method for transmitting beacon services to a User Equipment (UE) roaming in an area covered by several Radio Access Technologies (RAT's), the area comprising a plurality of geographical zones, each geographical zone comprising at least one network base station using several frequencies and at least one RAT among the plurality of RAT's, the User Equipment (UE) having various RAT capabilities and preferences and supporting several frequencies.

The method according to the invention comprises the step of periodically transmitting to the UE at least a beacon message M comprising information about the RAT's and the frequencies deployed in each zone of the area, and data indicating at least a validity period of the RAT's and the frequencies information.

The method according to the invention further comprises the step of regularly updating the information carried by the beacon message M based on feedback information are provided by the network base stations and/or a CPC database and/or a PMSE database (program making and social events) cooperating with the network base station 6 in the area.

It is to be noted that the validity period of the information carried by the beacons messages may be a fixed period scheduled (e.g. expired in 60s or after ten CPC messages broadcasting) with a predefined recurrence (e.g. 60s, everyday or every 2 hours).

In another variant, the validity period is a predefined period the validly of which is defined by means of an expiry date (e.g. 1/1/10 at 10 a.m.), the expiry date being scheduled with a predefined recurrence (e.g. every day or every 2 hours).

Upon reception of a beacon message M, the UE reads the data indicating the validity period, and enters in an idle state if the validity period has not yet expired, or reads the beacon message received subsequently in order to get updated information if the validity period has already expired.

The feedback information used to update the information carried by the beacon message M may comprise the UE location in the given zone, the current network base station load in a given zone, and/or a PMSE (program making and social events) predictable in the given zone. The method comprises the steps of:
defining in the area n specific sub- zones Zi (i=1 to n), n being an integer,
defining the beacon message M as a set of successive sub-messages Mi (i=1 to n), each sub-message Mi carrying information about a specific RAT and/or a specific frequency deployed in a specific sub-zone Zi of the area, the validity period Vi of the specific information, and an identifier IDi of the sub-message Mi,
including in each sub-message Mi (i=1 to n) the identifiers of the sub-messages Mi (i=1 to n) carrying information previously updated,
broadcasting the set of sub-messages Mi in the area,
retrieving by the UE the identifiers of sub-messages Mi carrying updated information,
reading by the UE only the sub-messages Mi corresponding to the retrieved identifiers.

The method according to the invention may be implemented in a geographical area comprising a plurality of meshes, in which the beacon message M is transmitted over a CPC (Cognitive Pilot Channel).

The beacon services are broadcasted in the Equipment (UE) roaming area by a Beacon base station comprising means for periodically broadcasting in the roaming area at least a beacon message M comprising information about the RAT's and the frequencies deployed in each zone of the area, and data indicating at least a validity period of the RAT's and the frequencies information.

The Beacon base station further comprises means for regularly updating the information carried by the beacon message M based on feedback information received from the network base stations. The Beacon base station comprises:
means for defining in the area n specific sub-zones Zi (i=1 to n), n being an integer,
means for defining the beacon message M as a set of successive sub-messages Mi (i=1 to n), each sub-message Mi carrying information about a specific RAT and/or a specific frequency deployed in a specific sub-zone Zi of the area, the validity period Vi of the specific information, and an identifier IDi of the sub-message Mi,
means for including in each sub-message Mi (i=1 to n), the identifiers of the sub-messages Mi (i=1 to n), the identifiers indicating to the UE the sub-messages Mi carrying updated information.

Thanks to the invention, information relating to RAT and frequency available in a geographic area can be grouped together in temporally way within one or several beacon message(s) enabling optimization of the battery consumption and also a permanent storage of the information in memory of the User Equipment.

### BRIEF DESCRIPTION OF THE DRAWINGS

The foregoing summary, as well as the following detailed description, will be better understood when read in conjunction with the appended figures illustrating an exemplary embodiment of the invention in which:
FIG. 1 schematically represents a UE roaming area divided in zones covered by different RAT's;
FIGS. 2A to 2D represent a diagram illustrating an example of periodic broadcast of a beacon message in the area of FIG. 1 and the UE equipment behavior upon reception of the message according to the invention;
FIG. 3 schematically illustrates a system for implementing a preferred embodiment of the invention;
FIG. 4 is a flow chart illustrating beacon messages transmission/reception in the architecture of FIG. 3;
FIG. 5 schematically illustrates an example of load prediction method for one frequency of a network base station used in the method according to the invention in case of no PMSE event in the area;
FIG. 6 schematically illustrates an example of load prediction method for one frequency of a network base station used in the method according to the invention in case of a PMSE event in the area;
FIG. 7 is a flow chart illustrating an embodiment of the method according to the invention; and
FIG. 8 is a flow chart illustrating an example of exploitation by the UE of information received in a beacon message.

### EMBODIMENTS FOR CARRYING OUT THE INVENTION

The invention will be described when implemented in a geographical area 2 divided into n elementary zones 4, as illustrated at FIG. 1, each zone being covered by a network base station 6 using a specific RAT and a specific frequency for communication.

A beacon base station 8, supervised by a beacon base manager, periodically transmits information on operators, Radio Access technologies (RAT's) and radio frequencies available in the geographical area 2 to cognitive UEs 10 such as mobile phones, PDA, or laptops roaming in the area 2 to allow the UEs to choose the most convenient operator, RAT and frequency available in the geographical area.

In a first embodiment of the invention, at the operator side, the beacon base station 8 generates a beacon message M comprising information about the RAT's and the frequencies deployed in each zone of the area 2, computes the validity period of the information and includes the computed validity period in beacon message M. Preferably, an error rate of the computed validity period is also included in the beacon message M. The UE 10 will use its CPC radio resources depending on a predefined error threshold.

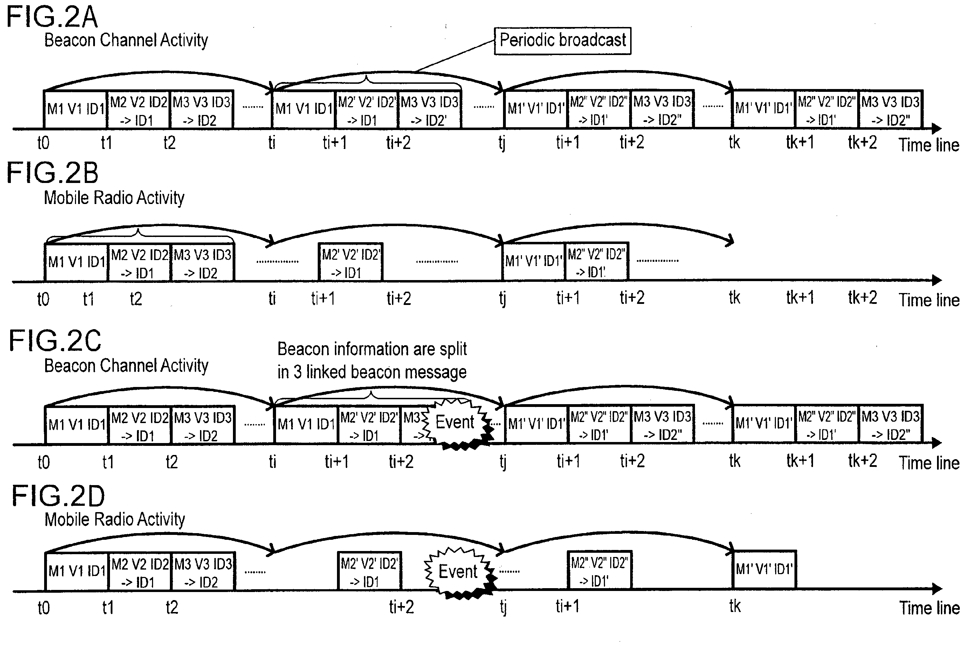

In the example illustrated at FIG. 2A, the beacon message M is broadcasted over a CPC (Cognitive Pilot Channel) channel and is composed of a set of three successive sub-messages Mi (i=1 to 3), each sub-message Mi carrying information about a specific RAT and/or a specific frequency deployed in a specific sub-zone Zi (i=1 to 3) of the area 2. Each sub-messages Mi (i=1 to 3) carries the validity period Vi (i=1 to 3) of the specific information, and identifier IDi (i=1 to 3) of the the sub-message Mi.

The sub-message Mi are then broadcasted periodically in the area 2 as illustrated at FIG. 2A.

The beacon base station 8 transmits each set of sub-messages Mi (i=1 to 3) at successive times t0 to t2, ti to ti+2, tj to tj+2, ... , tk to tk+2, and so on.

FIG. 2B illustrates the UE 10 behavior upon reception of the sub-message Mi (i=1 to 3).

The UE 10 receives the set of sub-messages Mi (i=1 to 3), at successive times t0 to t2, ti to ti+2, tj to tj+2, ... , tk to tk+2, and so on.

To avoid unnecessary reception of non updated information, for each sub-message Mi (i=1 to 3), the UE 10 compares the validity period Vi with the duration that elapsed between the time of receipt of the sub-message Mi (i=1 to 3), during the current reception period and the time of receipt of the sub-message Mi (i=1 to 3), during the previous reception period. If the validity period Vi is greater than the duration, the UE 10 does not use its CPC resources for receiving the information carried by the sub-message Mi (i=1 to 3), else, the UE 10 use its CPC resources for receiving the information carried by the sub-message Mi (i=1 to 3).

In the example illustrated by FIGS. 2A and 2B, it is assumed that the sub-message M2 is updated a first time at time ti+1, the sub-message M1 is updated at time tj, and the sub-message M2 is updated again at time tj+1. The validity period of the updated information carried by the sub-message M2 has been modified consequently at time ti+1, and at time tj+1 respectively to V2' and V2". In this case, the new validity periods V2' and V2" of the updated information carried by the messages M2' and M2" are also updated.

At the reception side, at time ti+1, after the comparison procedure described above, the UE 10 finds that the updated validity periods V2' of the updated information carried by sub-message M2' is less than the duration that elapsed between the time ti+1 and the time of receipt of sub-message M2 during the previous reception period. Similarly, at time tj, the UE 10 finds that the updated validity periods V1' of the updated information carried by sub-message M1' is less than the duration that elapsed between the time tj and the time of receipt of the sub-message M1' during the previous reception period. At tj+1, the UE 10 finds that the updated validity period V2" of the updated information carried by sub-message M2" is less than the duration that elapsed between the time tj+1 and the time of receipt of the sub-message M2" during the previous reception period. Consequently, in this case, based on the assessment of the validity periods Vi (i=1 to 3) of each sub-message Mi (i=1 to 3), the UE 10 will open its radio when validity period Vi is elapsed, in order to decode only the updated information.

Thanks to the assessment of the validity periods, the UE 10 is able to reduce its CPC radio activity and listen back to the CPC only when the CPC information has been or should be updated.

Referring now to FIGS. 2C and 2D, illustrating the situation of FIGS. 2A and 2B with the occurrence f an unpredictable event in the geographical area 2 that modifies one or all the validity periods Vi (i=1 to 3). Such event may be for example office hour, shopping, social event, UE 10 moving from an area to another area, etc.

As illustrated at FIG. 2C, we assume that such event occurs after the computing by the beacon base station of the validity periods Vi (i=1 to 3). The UE 10 will have the same behavior as in case depicted by FIG. 2B. However, if the event that occurred modifies V1, i.e., if the information carried by sub-message M1 has been updated due to this event, the UE 10 would be mislead by the previous validity period V1 and will therefore erroneously discard sub-message M1 carrying updated information.

To avoid such situation, the beacon base manager at the beacon base station includes in sub-message M2" the identifier of sub-message M1 to indicate to the UE 10 that information carried by sub-message M1 has been updated following the unexpected event. In this way, when the UE 10 reads the content of sub-message M2", it is informed about the new situation and gets back to sub-message M1 in the next decoding period in order to retrieve the updated information carried by sub-message M1'.

Thanks to the inclusion of the identifier of sub-message M1 in sub-message M2", the UE 10 is able to listen back to the CPC that has been updated after the computing by the beacon base station of the validity periods Vi (i=1 to 3).

In a preferred embodiment of the invention, the computing of the validity periods Vi is realized based on feedback information received from the network base stations 6.

Preferably, an error rate of the computed validity period is also included in the beacon message M.

FIG. 3 illustrates a system in which the beacon base station 8 cooperates with, the network base stations 6 deployed in the area 2, with a CPC database 12 and with a PMSE database 14 to gather feedback information for computing the validity periods Vi (i=1 to 3) of the information carried by each CPC sub-message Mi (i=1 to 3).

In this architecture, each network base station 6 regularly transmits to the beacon base station 8 traffic load information in his area of radio coverage, the CPC database 12 regularly transmits to the beacon base station 8 previous overload and traffic load information, while the PMSE database 14 regularly transmits to the beacon base station 8 event list information in the area 2. The beacon base station 8 generates a frequency load curve based on the information received from the network base stations, the CPC database 12, and PMSE database 14, and uses the curves for predicting the validity periods of RAT and frequency information in each sub-zone of the area 2 based on the gathered information. Such prediction may use for example a Linear Prediction technique based on MMSE (Minimum Mean Square Error) applied on previous and current network information. The beacon base station 8 may for example acquire network information from the LTE (Long Term Evolution) X2 interface that enables an exchange of overload and traffic information.

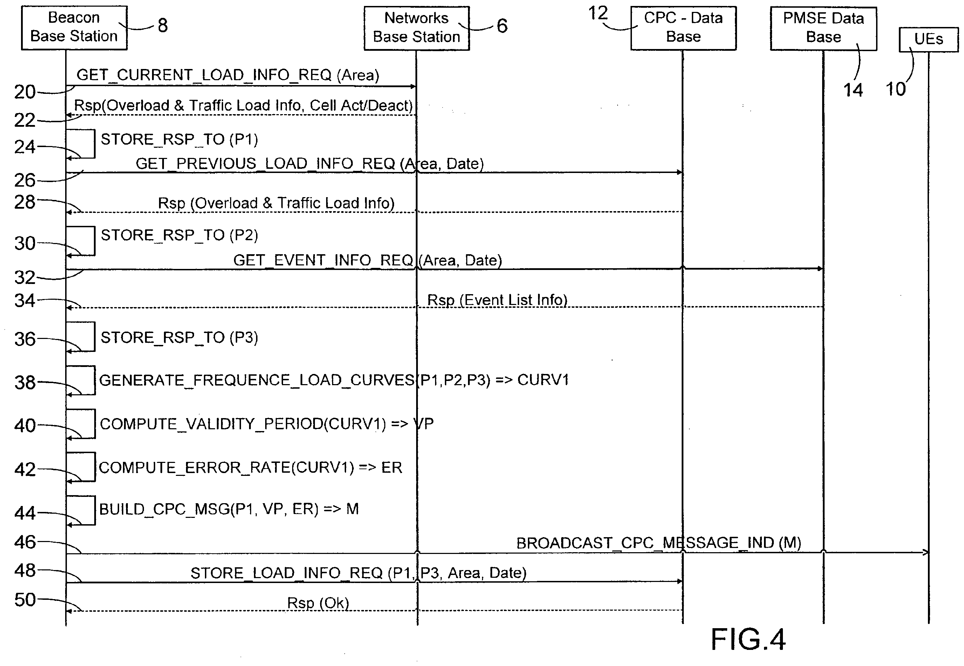

FIG. 4 illustrates the exchange of information between the beacon base station (BBS) 8, a network base station (NBS) 6, a UE 10 roaming in the coverage area of the NBS, the CPC database (CPCDB) 12, and the PMSE database (PMSEDB) 14.

At step 20, the BBS 8 transmits to the NBS 6 a request for current load information in the area coverage of the NBS 6. The BBS 8 gets network information from, for example, the LTE X2 interface. The feature load management enables to exchange overload and traffic load information.

At step 22, the NBS 6 transmits to the BBS 8 information about the overload and traffic load in its area coverage.

At step 24, the NBS 8 stores the information received from the BBS 6.

At step 26, the BBS 8 transmits to the CPCDB 12 a request for previous load information in the area coverage of the NBS 6.

At step 28, the CPCDB 12 transmits to the BBS 8 the requested information.

At step 30, the NBS 8 stores the information received from the CPCDB 12.

At step 32, the CPCDB 12 transmits to the PMSEDB 14 a request for information about current and the dates of scheduled events in the area coverage of the NBS 6.

At step 34, the PMSEDB 14 transmits to the CPCDB 12 a list of current event and the dates of scheduled event in coverage area of the NBS 6.

At step 36, the NBS 8 stores the information received from the PMSEDB 14.

At step 38, the BBS 8 generates a frequency load curve illustrating the time variation of the availability of a given frequency in the coverage area of the NBS 6. The Linear Prediction technique based on MMSE (Minimum Mean Square Error) is applied on previous and current network information. Then, the BBS 8 computes from the curve the validity period (step 40), and the error rate (step 42) of the information concerning the availability of the frequency in the coverage area. That is, the values VP and ER are extracted from generated frequency load curve.

At step 44, the BBS 8 defines a CPC message M based on the information received from the NBS 6, and on the validity period and the error rate computed at steps 40 and 42.

At step 46, the BBS 8 broadcasts the message M to the UE 10 present in the beacon area.

At step 48, the BBS 8 transmits the load information of the beacon area for the current date to the CPCDB 12 for storage.

At step 50, the CPCDB 12 transmits an acknowledgement message to the BBS 8.

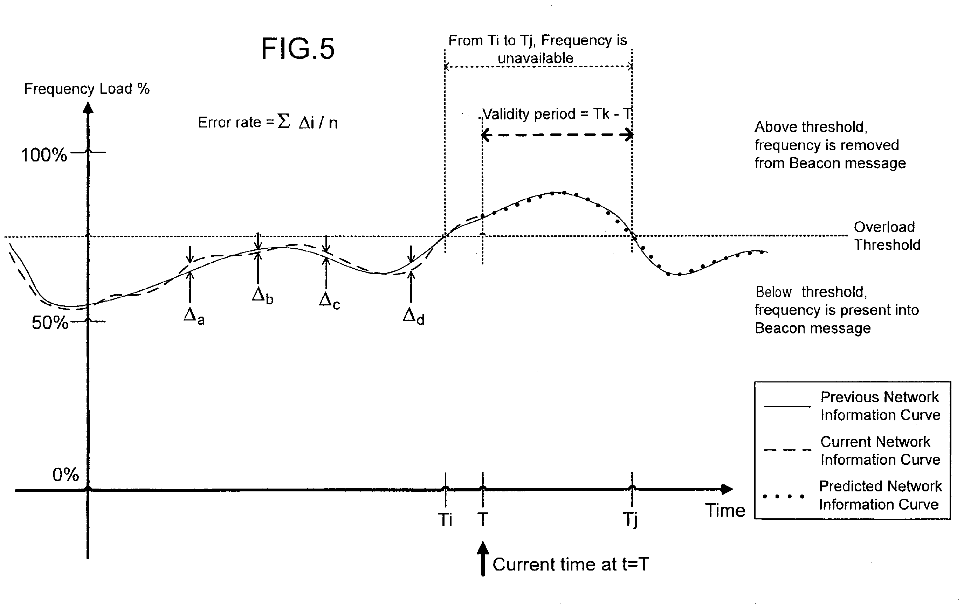

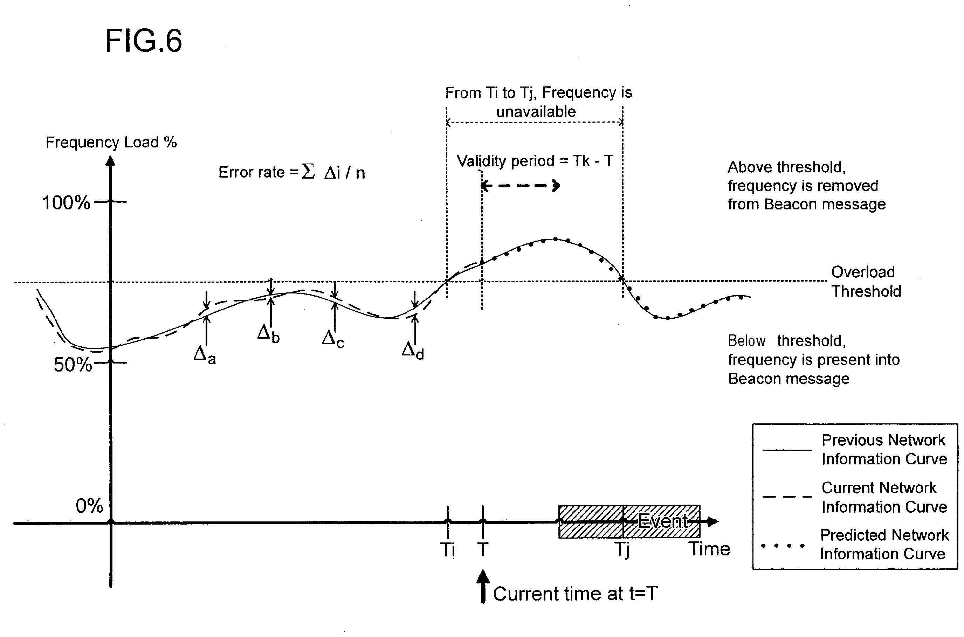

FIGS. 5 and 6 depict an example of curves generated by the BBS 8 respectively in case of no PMSE event (FIG. 5) and in case of the occurrence of a PMSE event (FIG. 6) in the coverage area of the UE 10.

In FIGS. 5 and 6, "error rate" shown in the figures is an average value of the difference between the previous and current network information. "Validity period" is computed from the predicted curve thanks to the linear prediction technique based on MMSE applied on previous and current network information. Above threshold, frequency is removed from Beacon message, and below the threshold, frequency is present into Beacon message. In FIG. 6, during the periods from Ti to Tj, a special event occurs at t=Tk, then validity period is not only based on predicated value but truncated because radio environment can be different due to this event present in the area.

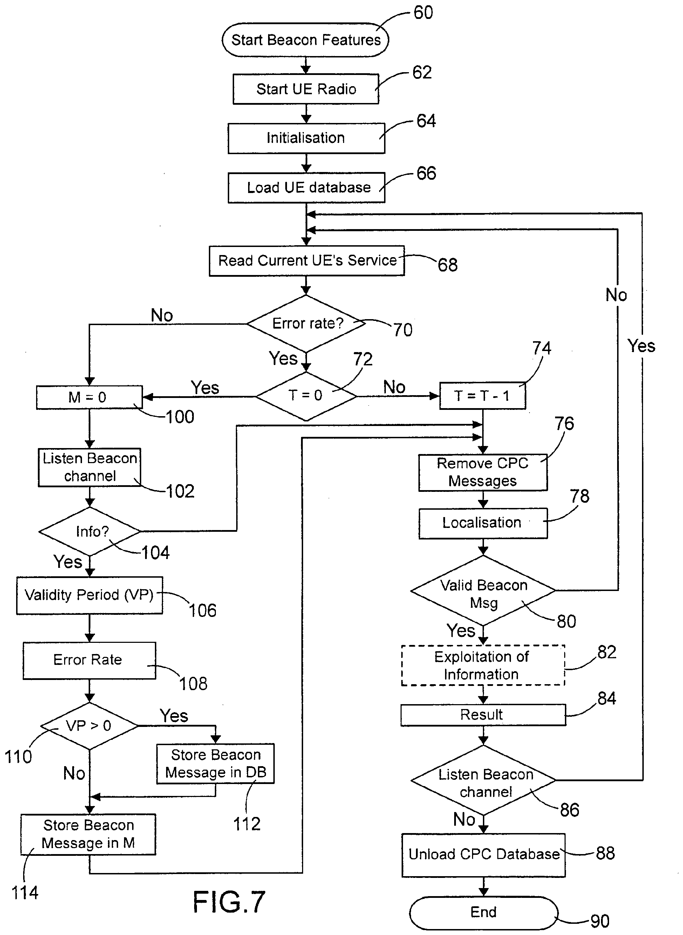

FIG. 7 illustrates the UE 10 behavior while roaming in area 2. The UE 10 is provided with a CPC module adapted for running a program for implementing the method according to the invention in the UE side.

At step 60, the CPC module starts CPC features, opens Radio for CPC channel (step 62), initializes variables relating to information validity period (T), error rate computed by the BBS 8 at step 42, services (S) and messages (M) (step 64) and loads the UE 10 database (step 66).

At step 68, the CPC module reads the parameters of the service currently used by the UE's and stores the parameters in a service memory storage.

At step 70, the CPC module verifies whether the error rate computed by the BBS 8 is appropriated to the UE 10 service or not.

If the error rate computed by the BBS 8 is appropriated to the UE 10, the CPC module verifies, at step 72, whether the validity period T of the information relating to the service currently used is elapsed or not.

If the validity period T is not elapsed, it is decremented by the CPC module at step 74.

At step 76, the CPC module removes obsolete CPC messages from the UE CPC database, and gets UE geographical position at step 78.

At step 80, the CPC module checks if there is a valid CPC message in the CPC database or message M which could be used for the current UE's position.

If this is not the case, the process continues from step 68.

Else, the UE 10 exploits (step 82) the valid RAT and frequencies information defined for its current position.

At step 84, the CPC module reads the exploitation result.

At step 86, the CPC module checks whether the UE 10 continues to listen to the CPC channel or not.

If so, the process continues from step 68.

Else, the CPC module unloads CPC database and close UE' S radio for CPC channel at step 88, and closes the UE's CPC features at step 90.

If the error rate computed by the BBS 8 Is not appropriated to the UE's 10 service currently used, or if the validity period T of the information relating to the last CPC message received is elapsed, the CPC module initializes the variable M relating to CPC messages to zero (step 100) and configures the UE 10 to listen to the CPC channel (step 102).

At step 104, the CPC module Verifies whether information is received from the BBS 8 or not.

If no information is received, the process continues from step 76.

Else, the CPC module reads the validity period value at step 106 and the error rate value at step 108.

At step 110, the CPC module verifies whether the validity period is elapsed or not.

If so, the CPC module stores the CPC message in the UE CPC database (step 112).

Else, the CPC module stores the CPC message in the UE 10 (step 114) and continues the process from step 76.

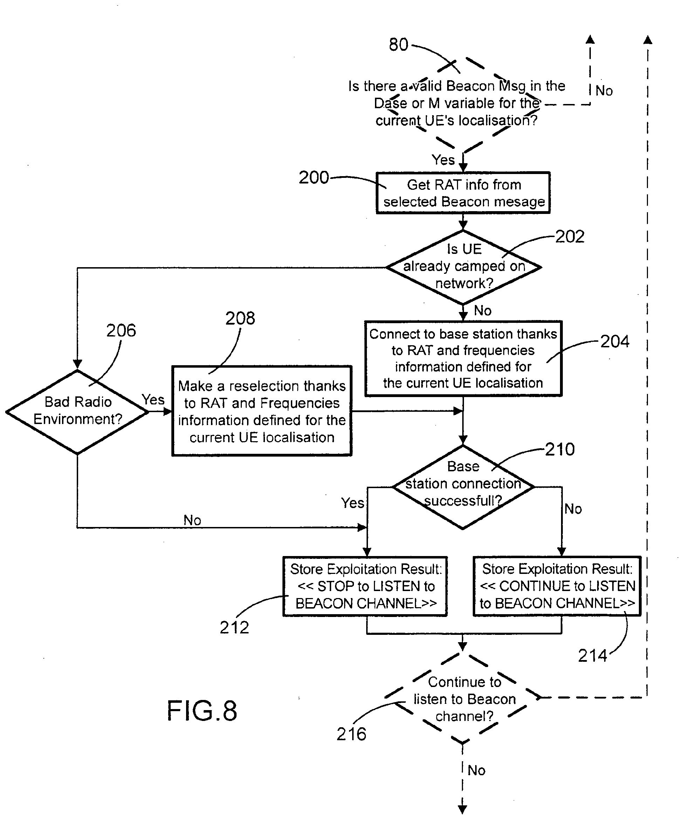

FIG. 8 illustrates an example of the exploitation step 82 of the valid RAT and frequencies information received by the UE 10 from the BBS 8.

This process starts from step 200 in FIG. 8. At this step, the CPC module gets RAT information from selected CPC message.

At step 202, the CPC module verifies whether the UE 10 is already camped on a zone covered by a NBS 6 or not.

If no, the UE 10 connects to a NBS 6 using the RAT and frequencies information defined for the current UE geographical position (step 204).

Else, the CPC module verifies feedback information relating to the quality of the radio environment (step 206).

If the quality of the radio environment is bad, the CPC module makes a reselection using the RAT and frequencies information defined for the current UE geographical position (step 208).

The process continues at step 210 in which, the CPC module verifies whether the NBS connection is successful or not.

If so, the CPC module stores, at step 112, the exploitation result which is "STOP to listen to the CPC channel".

Else, the CPC module stores, at step 114, the exploitation result which is "CONTINUE to listen to the CPC channel".

If the quality of the radio environment is good, the process continues from step 112.

Embodiments of this invention have been described in detail above with reference to the drawings. However, the specific structure of this invention is not limited to these embodiments and other designs and the like are also included insofar as they do not depart from the scope of this invention.

### INDUSTRIAL APPLICABILITY

The present invention is applicable to telecommunication field and particularly to beacon services to a UE roaming in an area covered by RAT's to improve the UE's power saving.

## Claims

1. A method for transmitting beacon services to a User Equipment (10), further referred to as UE, roaming in an area (2) covered by several Radio Access Technologies, further referred to as RAT's, said area (2) comprising a plurality of geographical zones (4), each geographical zone (4) comprising at least one network base station (6) using several frequencies and at least one RAT among said plurality of RAT's, said UE (10) having various RAT capabilities and preferences and supporting several frequencies, said method comprising the steps of:
periodically transmitting to the UE (10) at least a beacon message M comprising information about the RAT's and the frequencies deployed in each zone (4) of said area (2), and data indicating at least a validity period of said RAT's and said frequencies information,
defining in said area (2) n specific sub- zones (4) Zi, i= 1 to n, n being an integer;
defining the beacon message M as a set of successive sub-messages Mi, i=1 to n, each sub-message Mi carrying information about a specific RAT and/or a specific frequency deployed in a specific sub-zone (4) Zi of said area (2), the validity period Vi of said specific information, and an identifier IDi of said sub-message Mi;
including in each sub-message Mi, i=1 to n, the identifier of the sub-messages Mi, i=1 to n, carrying information previously updated;
broadcasting said set of sub-messages Mi in said area (2);
retrieving by the UE (10) the identifiers of sub-messages Mi carrying updated information; and
reading by said UE (10) only the sub-messages Mi corresponding to the retrieved identifiers.

2. The method according to claim 1, further comprising the step of regularly updating the information carried by said beacon message M based on feedback information provided by the network base stations (6).

3. The method according to claim 2, wherein said feedback information may be provided by a cognitive pilot channel, further referred to as CPC, database (12) and/or a program making and social events, PMSE database (14) cooperating with said network base station (6) in said area (2).

4. The method according to claim 3, wherein, upon reception of a beacon message M, the UE (10) reads the data indicating said validity period, and enters in an idle state if said validity period has not yet expired, or reads the beacon message received subsequently in order to get updated information if said validity period has already expired.

5. The method according to claim 3, wherein said feedback information comprises the UE (10) location in said area (2), the current network base station (6) load in said area (2), a program making and social events (14), further referred to as PMSE, predictable in said area (2).

6. The method according to claim 5, wherein said plurality of geographical zones (2) consist of a plurality of meshes, and wherein said beacon message M is transmitted over a CPC.

7. A beacon base station (8) for broadcasting beacon services to a User Equipment (10), further referred to as UE, roaming in an area (2), said area (2) covered by several Radio Access Technologies, further referred to as RAT's, and comprising a plurality of geographical zones (4), each geographical zone comprising at least one network base station (6) using several frequencies and at least one RAT among said plurality of RAT's, said User Equipment (2) having various RAT capabilities and preferences and supporting several frequencies, wherein said Beacon base station (8) comprises means for periodically transmitting to the UE (10) at least a beacon message M comprising information about the RAT's and the frequencies deployed in each zone of said area (2), and data indicating at least a validity period of said RAT's and said frequencies information,
means for defining in said area (2) n specific sub-zones (4) Zi, i=1 to n, n being an integer,
means for defining the beacon message M as a succession of successive sub-messages Mi, i=1 to n, each sub-message Mi carrying information about a specific RAT and/or a specific frequency deployed in a specific sub-zone (4) Zi of said area (2), the validity period Vi of said specific information, and identifier IDi of said sub-message Mi,
means for including in each sub-message Mi, i=1 to n, the identifiers of the sub-messages Mi, i=1 to n, carrying information previously updated, said identifiers indicating to the UE (10) the sub-messages Mi carrying updated information..

8. The beacon base station (8) according to claim 7, further comprising means for regularly updating the information carried by said beacon message M based on feedback information provided by the network base stations (6), and/or a Cognitive Pilot Channel database (12), further referred to as CPC database, and/or a program making and social events, Program Making and Social Events database (14), further referred to as PMSE database, cooperating with said network base station (6) in said area (2),.

9. The beacon base station (8) according to claim 7, further comprising:
means for including an error rate of the computed validity period in said beacon message M.

10. A User Equipment (10), UE, roaming in an area covered by several Radio Access Technologies, further referred to as RAT's, said area comprising a plurality of geographical zones, each geographical zone comprising at least one network base station using several frequencies and at least one RAT among said said plurality of RAT's, said UE having various RAT capabilities and preferences and supporting several frequencies, wherein said UE is adapted to periodically receive from a beacon base station at least a beacon message M comprising information about the RAT's and the frequencies deployed in each zone of said area, and data indicating at least a validity period of said RAT's and said frequencies information, wherein the beacon message M is defined as a succession of successive messages Mi, i=1 to n, each sub-message Mi carrying information about a specific RAT and/or specific frequency deployed in a specific sub-zone (4) Zi, i=1 to n, n being an integer, of said area, the validity period Vi of said specific information, and identifier IDi of said sub-message Mi, including in each sub-message Mi, i=1 to n, the identifier of the sub-messages Mi, i=1 to n, carrying information previously updated; wherein said UE is adapted to retrieve the identifiers of sub-messages Mi carrying updated information and is adapted to read only the sub-messages Mi corresponding to the retrieved identifiers.

11. The User Equipment (10), UE, according to claim 10, comprising a CPC module adapted for receiving CPC messages broadcasted by said beacon base station (8), said CPC module comprising means for verifying whether the validity period of the information carried by said CPC messages is elapsed or not.

12. A system adapted to perform a method according to any one of claims 1 to 6 for broadcasting beacon services to a User Equipment (10), further referred to as UE, roaming in an area (2), said area (2) covered by several Radio Access Technologies, further referred to as RAT's, said area (2) comprising a plurality of geographical zones (4), each geographical zone (4) comprising at least one network base station (6) using several frequencies and at least one RAT among said plurality of RAT's, said UE (10) having various RAT capabilities and preferences and supporting several frequencies, said system comprising a Cognitive Pilot Channel, further referred to as CPC, base station, a CPC database (12) and a Program Making and Social Events, further referred to as PMSE, database (14), said CPC base station is adapted to cooperates with said network base station (6) and with said PMSE database (14) to gather feedback information for computing the validity periods of the information carried by CPC sub-messages broadcast by said CPC base station.

13. The system according to claim 12, wherein each network base station (6) is configured for regularly transmitting to the CPC base station traffic load information in this area (2) of radio coverage, the CPC database (12) is configured to regularly transmit to the CPC base station previous overload and traffic load information, and the PMSE database (14) is configured to regularly transmit to the CPC base station event list information in the area (2), and wherein, said CPC base station is further configured to generate a frequency load curve based on the information received from the network base stations, from the CPC database (12), and from the PMSE database (14), and is configured to use said curve for predicting the validity periods of RAT and frequency information in each sub-zone (4) of the area (2) based on the gathered information.

## Patentansprüche

1. Verfahren zum Senden von Bakendiensten zu einem nachstehend als UE bezeichneten Benutzergerät (10), das sich in einem Bereich (2) bewegt, das von mehreren nachstehend als RAT bezeichneten Funkzugangstechnologien abgedeckt wird, wobei der Bereich (2) mehrere geographische Zonen (4) aufweist, wobei jede geographische Zone (4) wenigstens eine Netzbasisstation (6), die mehrere Frequenzen und wenigstens eine von den mehreren RAT verwendet, aufweist, wobei das UE (10) verschiedene RAT-Fähigkeiten und -Präferenzen aufweist und mehrere Frequenzen unterstützt, wobei das Verfahren folgende Schritte aufweist:
periodisches Senden wenigstens einer Bakennachricht M, die Informationen über die RAT und die in jeder Zone (4) des Bereichs (2) eingesetzten Frequenzen und Daten, welche zumindest eine Gültigkeitsperiode der RAT- und der Frequenzinformationen angeben, aufweist, zum UE (10),
Definieren n spezifischer Teilzonen (4) Zi, i = 1 bis n, wobei n eine natürliche Zahl ist, im Bereich (2),
Definieren der Bakennachricht M als Satz aufeinanderfolgender Teilnachrichten Mi, i = 1 bis n, wobei jede Teilnachricht Mi Informationen über eine spezifische RAT und/oder eine spezifische in einer spezifischen Teilzone (4) Zi des Bereichs (2) eingesetzte Frequenz, die Gültigkeitsperiode Vi der spezifischen Informationen und eine Kennung IDi der Teilnachricht Mi trägt,
Aufnehmen der Kennung der Teilnachrichten Mi, i = 1 bis n, welche zuvor aktualisierte Informationen tragen, in jede Teilnachricht Mi, i = 1 bis n,
Ausstrahlen des Satzes von Teilnachrichten Mi in jedem Bereich (2),
Abrufen der Kennungen der die aktualisierten Informationen tragenden Teilnachrichten Mi durch das UE (10) und
Lesen nur der Teilnachrichten Mi, die den abgerufenen Kennungen entsprechen, durch das UE (10).

2. Verfahren nach Anspruch 1, welches ferner den Schritt des regelmäßigen Aktualisierens der von der Bakennachricht M getragenen Informationen auf der Grundlage von den Netzbasisstationen (6) bereitgestellter Rückmeldungsinformationen aufweist.

3. Verfahren nach Anspruch 2, wobei die Rückmeldungsinformationen durch eine nachstehend als CPC-Datenbank bezeichnete Kognitiver-Pilotkanaldatenbank (12) und/oder eine Programmerstellung-und-Soziale-Ereignisse 'PMSE'-Datenbank (14), die mit der Netzbasisstation (6) im Bereich (2) zusammenarbeitet, bereitgestellt werden können.

4. Verfahren nach Anspruch 3, wobei das UE (10) nach dem Empfang einer Bakennachricht M die Daten, welche die Gültigkeitsperiode angeben, liest und in einen Bereitschaftszustand eintritt, falls die Gültigkeitsperiode noch nicht verstrichen ist, oder die anschließend empfangene Bakennachricht liest, um aktualisierte Informationen zu erhalten, falls die Gültigkeitsperiode bereits verstrichen ist.

5. Verfahren nach Anspruch 3, wobei die Rückmeldungsinformationen den Ort des UE (10) im Bereich (2), die Last der aktuellen Netzbasisstation (6) im Bereich (2) und eine Programmerstellung und soziale Ereignisse (14), nachstehend als PMSE bezeichnet, die im Bereich (2) vorhersehbar sind, aufweisen.

6. Verfahren nach Anspruch 5, wobei die mehreren geographischen Zonen (2) aus mehreren Gittern bestehen und wobei die Bakennachricht M über einen CPC gesendet wird.

7. Bakenbasisstation (8) zur Übermittlung von Bakendiensten an ein nachstehend als UE bezeichnetes Benutzergerät (10), das sich in einem Bereich (2) bewegt, wobei der Bereich (2) von mehreren nachstehend als RAT bezeichneten Funkzugangstechnologien abgedeckt wird und mehrere geographische Zonen (4) aufweist, wobei jede geographische Zone (4) wenigstens eine Netzbasisstation (6), die mehrere Frequenzen und wenigstens eine von den mehreren RAT verwendet, aufweist, wobei das Benutzergerät (2) verschiedene RAT-Fähigkeiten und -Präferenzen aufweist und mehrere Frequenzen unterstützt, wobei die Bakenbasisstation (8) Folgendes aufweist:
Mittel zum periodischen Senden wenigstens einer Bakennachricht M, die Informationen über die RAT und die in jeder Zone des Bereichs (2) eingesetzten Frequenzen und Daten, welche zumindest eine Gültigkeitsperiode der RAT- und der Frequenzinformationen angeben, aufweist, zum UE (10),
Mittel zum Definieren n spezifischer Teilzonen (4) Zi, i = 1 bis n, wobei n eine natürliche Zahl ist, im Bereich (2),
Mittel zum Definieren der Bakennachricht M als Satz aufeinanderfolgender Teilnachrichten Mi, i = 1 bis n, wobei jede Teilnachricht Mi Informationen über eine spezifische RAT und/oder eine spezifische in einer spezifischen Teilzone (4) Zi des Bereichs (2) eingesetzte Frequenz, die Gültigkeitsperiode Vi der spezifischen Informationen und eine Kennung IDi der Teilnachricht Mi trägt,
Mittel zum Aufnehmen der Kennung der Teilnachrichten Mi, i = 1 bis n, welche zuvor aktualisierte Informationen tragen, in jede Teilnachricht Mi, i = 1 bis n, wobei die Kennungen dem UE (10) die aktualisierte Informationen tragenden Teilnachrichten Mi angeben.

8. Bakenbasisstation (8) nach Anspruch 7, welche ferner Mittel zum regelmäßigen Aktualisieren der von der Bakennachricht M getragenen Informationen auf der Grundlage von den Netzbasisstationen (6) bereitgestellter Rückmeldungsinformationen und/oder einer nachstehend als CPC-Datenbank bezeichneten Kognitiver-Pilotkanaldatenbank (12) und/oder einer nachstehend als PMSE-Datenbank bezeichneten Programmerstellung-und-Soziale-Ereignisse-Datenbank (14), die mit der Netzbasisstation (6) im Bereich (2) zusammenarbeitet, aufweist.

9. Bakenbasisstation (8) nach Anspruch 7, welche ferner Folgendes aufweist:
Mittel zum Aufnehmen einer Fehlerrate der berechneten Gültigkeitsperiode in die Bakennachricht M.

10. Benutzergerät (UE) (10), das sich in einem von mehreren nachstehend als RAT bezeichneten Funkzugangstechnologien abgedeckten Bereich bewegt, wobei der Bereich mehrere geographische Zonen aufweist, wobei jede geographische Zone wenigstens eine Netzbasisstation, die mehrere Frequenzen und wenigstens eine von den mehreren RAT verwendet, aufweist, wobei das UE verschiedene RAT-Fähigkeiten und -Präferenzen aufweist und mehrere Frequenzen unterstützt, wobei das UE dafür eingerichtet ist, von einer Bakenbasisstation wenigstens eine Bakennachricht M periodisch zu empfangen, die Informationen über die RAT und die in jeder Zone des Bereichs eingesetzten Frequenzen und Daten, welche zumindest eine Gültigkeitsperiode der RAT- und der Frequenzinformationen angeben, aufweist, wobei die Bakennachricht M als eine Folge aufeinanderfolgender Nachrichten Mi, i = 1 bis n, definiert ist, wobei jede Teilnachricht Mi Informationen über eine spezifische RAT und/oder eine spezifische in einer spezifischen Teilzone (4) Zi, i = 1 bis n, wobei n eine natürliche Zahl ist, eingesetzte Frequenz des Bereichs, die Gültigkeitsperiode Vi der spezifischen Informationen und die Kennung IDi der Teilnachricht Mi trägt, wobei in jede Teilnachricht Mi, i = 1 bis n, die Kennung der Teilnachrichten Mi, i = 1 bis n, die zuvor aktualisierte Informationen tragen, aufgenommen ist, wobei das UE dafür eingerichtet ist, die Kennungen der Teilnachrichten Mi, die aktualisierte Informationen tragen, abzurufen und nur die Teilnachrichten Mi zu lesen, die den abgerufenen Kennungen entsprechen.

11. Benutzergerät (UE) (10) nach Anspruch 10, das ein CPC-Modul aufweist, das für den Empfang von der Bakenbasisstation (8) ausgestrahlter CPC-Nachrichten eingerichtet ist, wobei das CPC-Modul Mittel zum Prüfen, ob die Gültigkeitsperiode der von den CPC-Nachrichten getragenen Informationen verstrichen ist, aufweist.

12. System, das dafür eingerichtet ist, ein Verfahren nach einem der Ansprüche 1 bis 6 zur Übermittlung von Bakendiensten zu einem nachstehend als UE bezeichneten Benutzergerät (10), das sich in einem Bereich (2) bewegt, auszuführen, wobei der Bereich (2) von mehreren nachstehend als RAT bezeichneten Funkzugangstechnologien abgedeckt wird, wobei der Bereich (2) mehrere geographische Zonen (4) aufweist, wobei jede geographische Zone (4) wenigstens eine Netzbasisstation (6), die mehrere Frequenzen und wenigstens eine von den mehreren RAT verwendet, aufweist, wobei das UE (10) verschiedene RAT-Fähigkeiten und -Präferenzen aufweist und mehrere Frequenzen unterstützt, wobei das System eine nachstehend als CPC-Basisstation bezeichnete Kognitiver-Pilotkanal-Basisstation, eine CPC-Datenbank (12) und eine nachstehend als PMSE-Datenbank bezeichnete Programmerstellung-und-Soziale-Ereignisse-Datenbank (14) aufweist, wobei die CPC-Basisstation dafür eingerichtet ist, mit der Netzbasisstation (6) und mit der PMSE-Datenbank (14) zusammenzuarbeiten, um Rückmeldungsinformationen zur Berechnung der Gültigkeitsperioden der Informationen zu sammeln, die von CPC-Unternachrichten getragen werden, welche von der CPC-Basisstation übermittelt werden.

13. System nach Anspruch 12, wobei jede Netzbasisstation (6) dafür ausgelegt ist, zur CPC-Basisstation regelmäßig Verkehrslastinformationen in diesem Bereich (2) der Funkabdeckung zu senden, die CPC-Datenbank (12) dafür ausgelegt ist, zur CPC-Basisstation regelmäßig frühere Überlastungs- und Verkehrslastinformationen zu senden, und die PMSE-Datenbank (14) dafür eingerichtet ist, zur CPC-Basisstation regelmäßig Ereignislisteninformationen im Bereich (2) zu senden, und wobei die CPC-Basisstation ferner dafür ausgelegt ist, eine Frequenzlastkurve anhand der von den Netzbasisstationen, der CPC-Datenbank (12) und der PMSE-Datenbank (14) empfangenen Informationen zu erzeugen, und dafür ausgelegt ist, die Kurve zur Vorhersage der Gültigkeitsperioden von RAT- und Frequenzinformationen in jeder Teilzone (4) des Bereichs (2) auf der Grundlage der gesammelten Informationen zu verwenden.

## Revendications

1. Procédé pour transmettre des services de balise à un Equipement Utilisateur (10), en outre appelé UE, en itinérance dans une surface (2) couverte par plusieurs Technologies d'Accès Radio, en outre appelées RAT, ladite surface (2) comprenant une pluralité de zones géographiques (4), chaque zone géographique (4) comprenant au moins une station de base de réseau (6) utilisant plusieurs fréquences et au moins une RAT parmi ladite pluralité de RAT, ledit UE (10) ayant diverses capacités et préférences RAT et supportant plusieurs fréquences, ledit procédé comprenant les étapes de :
transmettre périodiquement à l'UE (10) au moins un message de balise M comprenant des informations sur les RAT et les fréquences déployées dans chaque zone (4) de ladite surface (2), et des données indiquant au moins une période de validité desdites informations de RAT et de fréquences,
définir dans ladite surface (2) n sous-zones spécifiques (4) Zi, i = 1 à n, n étant un entier ;
définir le message de balise M comme un ensemble de sous-messages successifs, Mi, i = 1 à n, chaque sous-message Mi acheminant des informations sur une RAT spécifique et/ou une fréquence spécifique déployée dans une sous-zone spécifique (4) Zi de ladite surface (2), la période de validité Vi desdites informations spécifiques, et un identificateur Idi dudit sous-message Mi ;
inclure dans chaque sous-message Mi, i = 1 à n, l'identificateur des sous-messages Mi, i = 1 à n, acheminant des informations mises à jour précédemment ;
diffuser ledit ensemble de sous-messages Mi dans ladite surface (2) ;
récupérer par l'UE (10) les identificateurs de sous-messages Mi acheminant des informations mises à jour ; et
lire par ledit UE (10) uniquement les sous-messages Mi correspondant aux identificateurs récupérés.

2. Procédé selon la revendication 1, comprenant en outre l'étape de mettre à jour régulièrement les informations acheminées par ledit message de balise M sur la base d'informations de rétroaction fournies par les stations de base de réseau (6).

3. Procédé selon la revendication 2, dans lequel lesdites informations de rétroaction peuvent être fournies par une base de données de canal pilote cognitif, en outre appelé CPC, (12) et/ou une base de données de conception de programme et d'événements sociaux, PMSE (14) coopérant avec ladite station de base de réseau (6) dans ladite surface (2).

4. Procédé selon la revendication 3, dans lequel, lors de la réception d'un message de balise M, l'UE (10) lit les données indiquant ladite période de validité, et entre dans un état de repos si ladite période de validité n'a pas encore expiré, ou lit le message de balise reçu subséquemment afin d'obtenir des informations mises à jour si ladite période de validité a déjà expiré.

5. Procédé selon la revendication 3, dans lequel lesdites informations de rétroaction comprennent la localisation de l'UE (10) dans ladite surface (2), la charge de la station de base de réseau actuelle (6) dans ladite surface (2), une conception de programme et événements sociaux (14), en outre appelés PMSE, prévisibles dans ladite surface (2).

6. Procédé selon la revendication 5, dans lequel ladite pluralité de zones géographiques (2) se compose d'une pluralité de mailles, et dans lequel ledit message de balise M est transmis sur un CPC.

7. Station de base de balise (8) pour diffuser des services de balise à un Equipement Utilisateur (10), en outre appelé UE, en itinérance dans une surface (2), ladite surface (2) couverte par plusieurs Technologies d'Accès Radio, en outre appelées RAT, et comprenant une pluralité de zones géographiques (4), chaque zone géographique comprenant au moins une station de base de réseau (6) utilisant plusieurs fréquences et au moins une RAT parmi ladite pluralité de RAT, ledit Equipement Utilisateur (2) ayant diverses capacités et préférences RAT et supportant plusieurs fréquences, où ladite station de base de Balise (8) comprend des moyens pour transmettre périodiquement à l'UE (10) au moins un message de balise M comprenant des informations sur les RAT et les fréquences déployées dans chaque zone de ladite surface (2), et des données indiquant au moins une période de validité desdites informations de RAT et de fréquences,
des moyens pour définir dans ladite surface (2) n sous-zones spécifiques (4) Zi, i = 1 à n, n étant un entier,
des moyens pour définir le message de balise M comme une succession de sous-messages successifs, Mi, i = 1 à n, chaque sous-message Mi acheminant des informations sur une RAT spécifique et/ou une fréquence spécifique déployée dans une sous-zone spécifique (4) Zi de ladite surface (2), la période de validité Vi desdites informations spécifiques, et un identificateur Idi dudit sous-message Mi,
des moyens pour inclure dans chaque sous-message Mi, i = 1 à n, les identificateurs des sous-messages Mi, i = 1 à n, acheminant des informations mises à jour précédemment, lesdits identificateurs indiquant à l'UE (10) les sous-messages Mi acheminant des informations mises à jour.

8. Station de base de balise (8) selon la revendication 7, comprenant en outre des moyens pour mettre à jour régulièrement les informations acheminées par ledit message de balise M sur la base d'informations de rétroaction fournies par les stations de base de réseau (6) et/ou une base de données de Canal Pilote Cognitif (12), en outre appelée base de données CPC, et/ou une base de données de conception de programme et d'événements sociaux (14), en outre appelée base de données PMSE, coopérant avec ladite station de base de réseau (6) dans ladite surface (2).

9. Station de base de balise (8) selon la revendication 7, comprenant en outre :
des moyens pour inclure un taux d'erreur de la période de validité calculée dans ledit message de balise M.

10. Equipement Utilisateur (10), UE, en itinérance dans une surface couverte par plusieurs Technologies d'Accès Radio, en outre appelées RAT, ladite surface comprenant une pluralité de zones géographiques, chaque zone géographique comprenant au moins une station de base de réseau utilisant plusieurs fréquences et au moins une RAT parmi ladite pluralité de RAT, ledit UE ayant diverses capacités et préférences RAT et supportant plusieurs fréquences, dans lequel ledit UE est adapté pour recevoir périodiquement en provenance d'une station de base de balise au moins un message de balise M comprenant des informations sur les RAT et les fréquences déployées dans chaque zone de ladite surface, et des données indiquant au moins une période de validité desdites informations de RAT et de fréquences, dans lequel le message de balise M est défini comme une succession de messages successifs, Mi, i = 1 à n, chaque sous-message Mi acheminant des informations sur une RAT spécifique et/ou une fréquence spécifique déployée dans une sous-zone spécifique (4) Zi, i = 1 à n, n étant un entier, de ladite surface, la période de validité Vi desdites informations spécifiques, et un identificateur Idi dudit sous-message Mi, incluant dans chaque sous-message Mi, i = 1 à n, l'identificateur des sous-messages Mi, i = 1 à n, acheminant des informations mises à jour précédemment ; dans lequel ledit UE est adapté pour récupérer les identificateurs de sous-messages Mi acheminant des informations mises à jour et est adapté pour lire uniquement les sous-messages Mi correspondant aux identificateurs récupérés.

11. Equipement Utilisateur (10), UE, selon la revendication 10, comprenant un module CPC adapté pour recevoir des messages CPC diffusés par ladite station de base de balise (8), ledit module CPC comprenant des moyens pour vérifier si la période de validité des informations acheminées par lesdits messages CPC est écoulée ou non.

12. Système adapté pour effectuer un procédé selon l'une quelconque des revendications 1 à 6 pour diffuser des services de balise à un Equipement Utilisateur (10), en outre appelé UE, en itinérance dans une surface (2), ladite surface (2) couverte par plusieurs Technologies d'Accès Radio, en outre appelées RAT, ladite surface (2) comprenant une pluralité de zones géographiques (4), chaque zone géographique (4) comprenant au moins une station de base de réseau (6) utilisant plusieurs fréquences et au moins une RAT parmi ladite pluralité de RAT, ledit UE (10) ayant diverses capacités et préférences RAT et supportant plusieurs fréquences, ledit système comprenant une station de base de Canal Pilote Cognitif, en outre appelé CPC, une base de données CPC (12) et une base de données Conception de Programme et Evénements Sociaux, en outre appelés PMSE (14), ladite station de base CPC est adaptée pour coopérer avec ladite station de base de réseau (6) et avec ladite base de données PMSE (14) pour rassembler des informations de rétroaction pour calculer les périodes de validité des informations acheminées par des sous-messages CPC diffusés par ladite station de base CPC.

13. Système selon la revendication 12, dans lequel chaque station de base de réseau (6) est configurée pour transmettre régulièrement à la station de base CPC des informations de charge de trafic dans cette surface (2) de couverture radio, la base de données CPC (12) est configurée pour transmettre régulièrement à la station de base CPC des informations de surcharge et de charge de trafic précédentes, et la base de données PMSE (14) est configurée pour transmettre régulièrement à la station de base CPC des informations de liste d'événements dans la surface (2), et dans lequel, ladite station de base CPC est en outre configurée pour générer une courbe de charge de fréquence sur la base des informations reçues en provenance des stations de base de réseau, en provenance de la base de données CPC (12), et en provenance de la base de données PMSE (14), et est configurée pour utiliser ladite courbe pour prédire les périodes de validité d'informations de RAT et de fréquence dans chaque sous-zone (4) de la surface (2) sur la base des informations rassemblées.
